# EUROPEAN PATENT SPECIFICATION

(11) **EP 2 050 369 B1**
(45) Date of publication and mention of the grant of the patent: **04.08.2010**
(21) Application number: 07425653.8
(22) Date of filing: 18.10.2007
(51) Int. Cl.: A47J 31/42

(54) **Hopper for coffee machine**
Trichter für eine Kaffeemaschine
Trémie pour machine à café

(43) Date of publication of application: 22.04.2009
(73) Proprietor: Gruppo Cimbali S.p.A., 20082 Binasco (MI) (IT)
(72) Inventor: Sala, Dario, 20082 Binasco (MI) (IT)
(74) Representative: Bonvicini, Davide

(56) References cited:
- NL-C2- 1 028 260
- US-A- 4 789 106
- US-A1- 2006 201 339

## Description

The present invention relates to a hopper for containing and dispensing coffee beans to a coffee machine according to the preamble of claim 1.

Hoppers for containing and dispensing coffee beans are known in the field of machines for the preparation of coffee, whether they are automatic or manual.

The diversification of the methods of preparing and consuming espresso coffee has determined the formulation of specific mixtures for the various types of coffee. Typically, for the preparation of Italian-style, very strong, "ristretto" coffee, the mixtures used are strong, highly roasted, with low acidity, while the preparation of weak black coffees, widespread for example in the countries of Northern Europe, requires the use of more lightly roasted mixtures having a greater degree of acidity.

It is also useful to note that each mixture requires a specific grind. Consequently, the dispensing apparatuses of coffee machines, both automatic and manual, intended to dispense coffee of different mixtures are provided with a plurality of coffee grinders.

The methods of use of the coffee grinding devices vary according to the use for which the coffee machine is intended, for example for a bar, a café, self-service, etc. For example, an automatic machine may have to dispense white coffee with a light mixture, espresso coffee with a darker mixture and decaffeinated coffee. Such a machine must therefore be provided with three different coffee grinders, each of which must be fed from a separate hopper intended to contain and dispense a particular mixture of coffee beans.

A device suitable for grinding a measured amount of coffee is disclosed in US-A-2006/0201339.

The device comprises a coffee beans container which is permanently subdivided into two compartments each of which is filled with a respective type of coffee beans.

An individual coffee grinder assembly is assigned to each compartment. The outlet of the coffee grinder assemblies open into a common feeding channel serving for filling the brewing chamber of a coffee machine.

According to such a known device a coffee beverage can be prepared by using different blends of freshly ground coffee beans.

It is also useful to note that, in order to dispense both one cup of coffee and two cups of coffee, it is necessary to vary the grind to compensate for the different resistance of the ground coffee when its quantity varies.

Moreover, if it should be desired to dispense espresso coffee with the same type of mixture, it is necessary to use two different grinding devices to adapt the grind to the measured amount necessary for one cup and for two cups, and therefore it is indispensable to have available a hopper with a lager capacity in order to feed both the grinding devices with the same mixture.

From the foregoing, it is apparent that there is a need to have available a hopper which can comply with any combination of coffee bean mixture and grinding devices required by the user.

It is therefore an aim of the present invention to provide a hopper capable of meeting the aforesaid requirement and which therefore can be adapted to the specific mixtures and coffee grinder combinations required by the user.

This aim is achieved by means of a hopper for containing and dispensing coffee beans for a coffee machine according to claim 1.

Owing to the presence of a plurality of dispensing openings and of divider members removably associated with the hopper, it is possible to produce a hopper with one or more compartments for feeding one or more dispensing openings so as to be able to produce a plurality of combinations of coffee bean mixtures for feeding the grinding devices connected to the dispensing openings.

Further characteristics and advantages of the hopper according to the present invention will become clear from the following description of a preferred exemplary embodiment, provided by way of non-limiting example with reference to the appended drawings, in which:

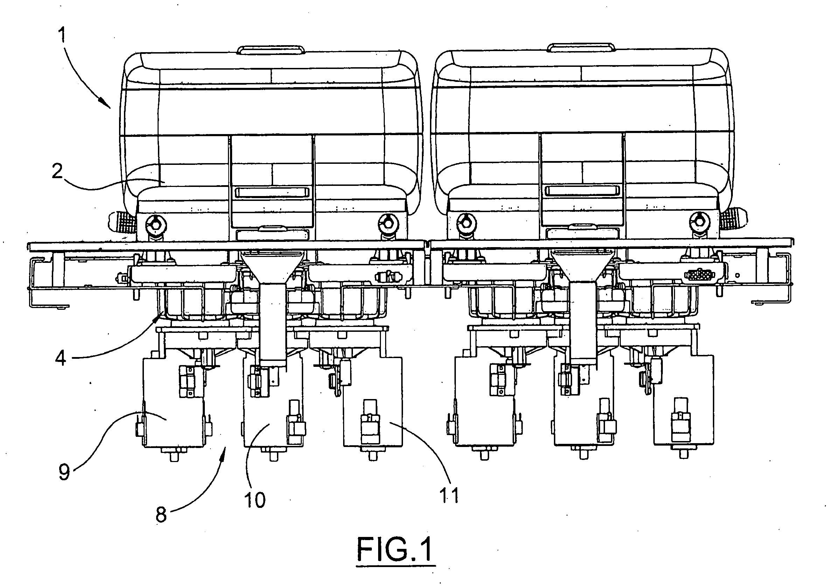

- Figure 1 shows a view of two groups of coffee grinding devices intended to serve a machine with two hoppers for containing and dispensing coffee beans.

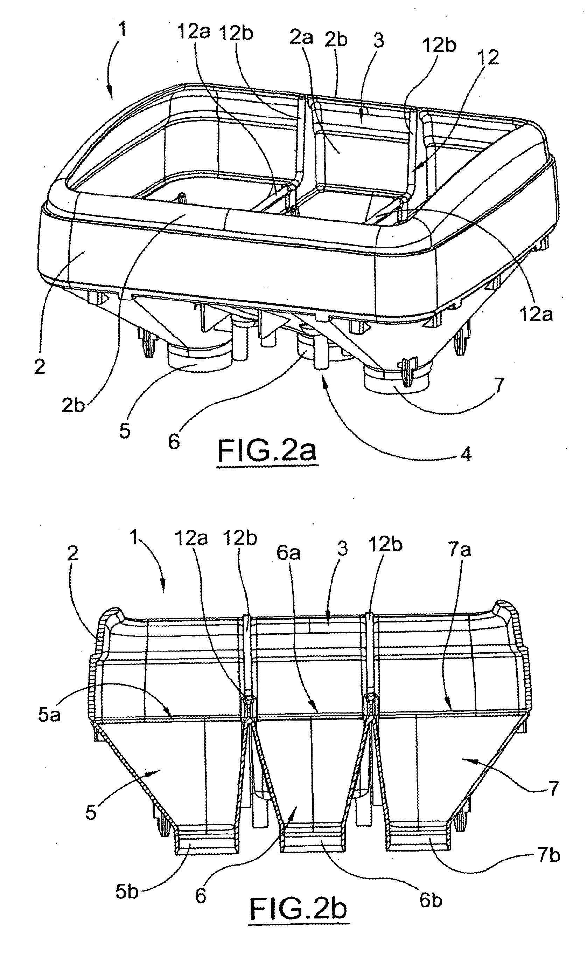

- Figure 2a shows a perspective view of a hopper according to the present invention.
- Figure 2b shows a sectional view of the hopper of Figure 2a, along the section line connecting the centres of the discharge openings of the hopper,
- Figures 3, 4 and 5 show perspective views of divider members that can be associated with the hopper of Figure 2a for forming one or more compartments within the hopper,
- Figure 6a shows a perspective view of the hopper of Figure 2a with two divider members of Figure 3,
- Figure 6b shows a sectional view of the hopper of Figure 6a, along the section line connecting the centres of the discharge openings of the hopper,
- Figure 7a shows a perspective view of the hopper of Figure 2a with the divider member of Figure 4,
- Figure 7b shows a sectional view of the hopper of Figure 7a, along the section line connecting the centres of the discharge openings of the hopper,
- Figure 8a shows a perspective view of the hopper of Figure 2a with the divider member of Figure 5, and
- Figure 8b shows a sectional view of the hopper of Figure 8a, along the section line connecting the centres of the discharge openings of the hopper.

With reference to the appended drawings, the reference 1 indicates as a whole a hopper 1 for containing and dispensing coffee beans to a coffee machine.

In particular, the hopper 1 of the present invention finds an application in automatic coffee machines. However, the hopper may also be used for dispensing coffee beans to manual coffee machines and to the coffee machines of vending machines.

The hopper 1 comprises a hopper body 2 suitable for containing coffee beans and having an inlet aperture 3 suitable for receiving coffee beans, and dispensing means, indicated as a whole by 4, for dispensing coffee beans to a coffee machine.

In particular, the dispensing means 4 of the hopper 1 comprise a plurality of dispensing openings connectable to a respective plurality of grinding means 8.

According to the embodiment shown in the drawings, the plurality of dispensing openings comprises three dispensing openings 5, 6, 7, each connected to a respective grinding device 9, 10, 11 of a coffee machine (not shown in the drawings).

The dispensing openings 5, 6, 7 are separate from one another and each have an inlet section 5a, 6a, 7a communicating with the inlet aperture 3 of the hopper 1, and an outlet section 5b, 6b, 7b for dispensing the coffee beans to the grinding devices 9, 10, 11.

In order to adapt the hopper 1 to the specific mixtures and combinations of grinding devices required by a user, the hopper 1 comprises divider means removably associated within the hopper body 2 for forming one or more containment compartments separate from one another.

Each compartment has a respective inlet aperture and communicates with at least one dispensing opening for conveying the coffee from the respective inlet aperture towards the dispensing opening. In this way, as the divider means associated with the hopper 1 vary and therefore as the number of compartments formed by the divider means vary, the user is free to produce any combination of mixture and of grinding devices.

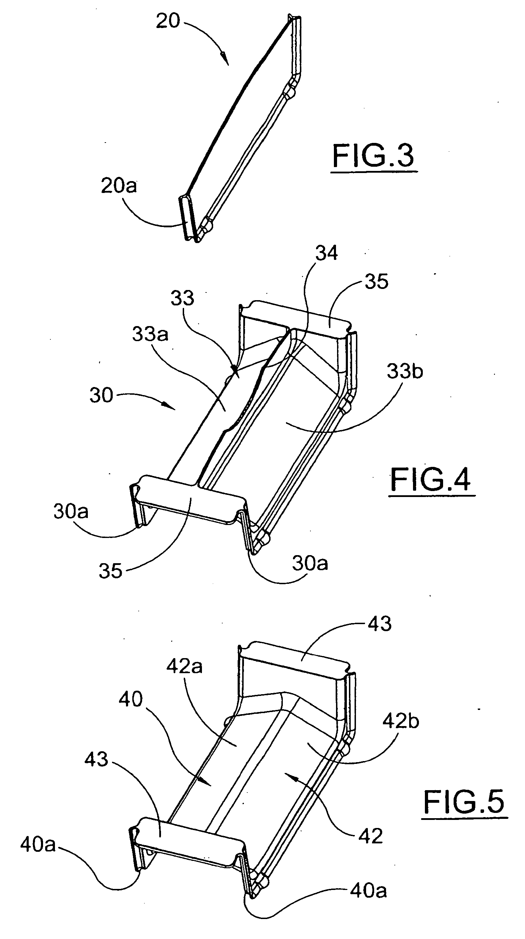

Figures 3, 4 and 5 show examples of divider means 20, 30, 40 that can be removably associated within the hopper body 2 in order to form one or more compartments. In particular, the divider means comprise engagement means suitable for coupling removably to corresponding engagement means provided within the hopper.

According to one embodiment, the engagement means of the hopper 1 comprise ribs 12 provided internally in the hopper body 2. In the case in point, the ribs 12 comprise lower ribs 12a and lateral ribs 12b.

The lower ribs 12a form the separation zone between the inlet sections 5a and 6a and between the inlet sections 6a and 7a of the dispensing openings 5, 6, 7.

The lateral ribs 12b, contiguous with the lower ribs 12a, are provided on the inner walls 2a of the hopper body 2 and extend from the lower ribs 12a to the inlet aperture 3 of the hopper 1.

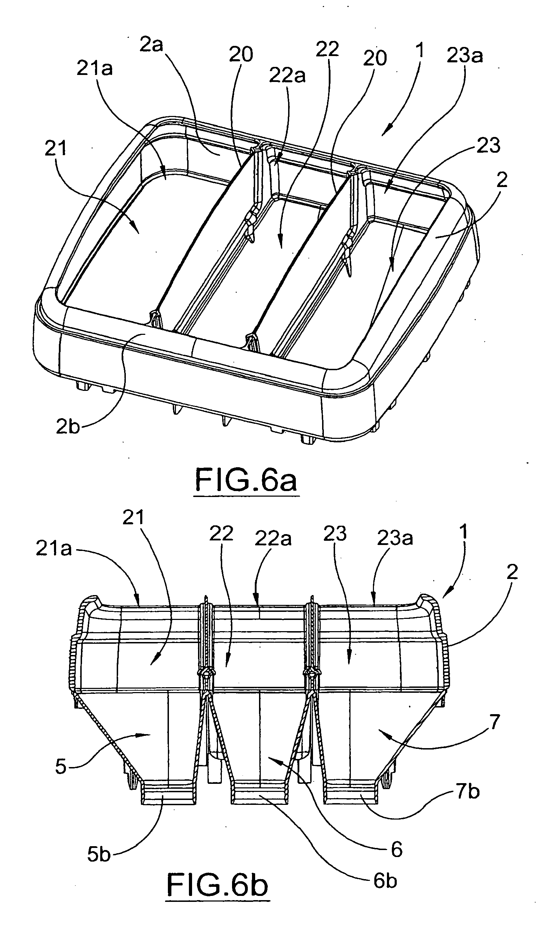

According to the example shown in Figures 6a and 6b, the divider means comprise two divider members 20 suitable for forming, within the hopper body 2, three separate compartments 21, 22, 23, each compartment having an inlet aperture 21a, 22a, 23a and being suitable for conveying the coffee beans towards a respective dispensing opening 5, 6, 7.

This makes it possible to obtain a three-compartment hopper in which each compartment may contain a certain coffee bean mixture to be dispensed to a suitable grinding device.

In the example, the divider member 20 comprises a rectangular panel having a groove 20a, provided on three sides of the perimeter of the panel and intended to be coupled to the ribs 12a and 12b of the hopper 1.

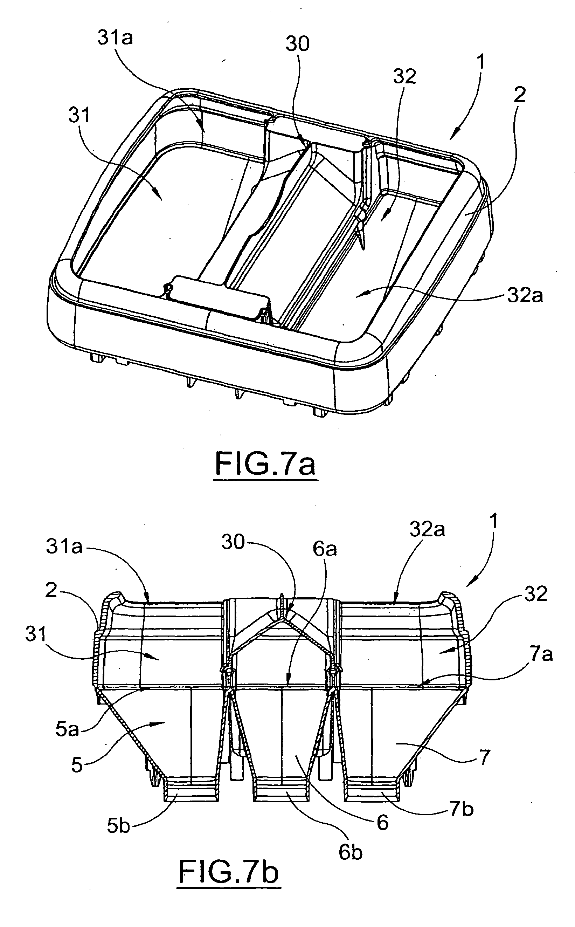

According to the example shown in Figures 7a and 7b, the divider means comprise a member 30 associated, for closure, with the inlet section of a dispensing opening, in the example with the inlet section 6a of the dispensing opening 6, and configured in such as way as to form, within the hopper 2, two separate compartments 31, 32 having respective inlet apertures 31a, 32a and being suitable for conveying the coffee beans towards the inlet sections 5a, 7a of the other two dispensing openings 5, 7.

This makes it possible to obtain a two-compartment hopper in which each compartment dispenses coffee beans to its own grinding device. In this case, one dispensing opening, in the example the dispensing opening 6, is completely excluded.

In the example, the divider member 30 comprises a roof-like structure 33 having two opposed grooves 30a intended to be coupled to the ribs 12a and 12b of the hopper 1, and two flat members 35 suitable for abutting against a portion of the upper edge 2b of the hopper body 2. The two sides 33a, 33b of the roof-like structure 33 make it possible to convey the coffee beans contained within the compartments 31, 32 towards the respective dispensing openings 5, 7.

In order to separate the two compartments 31, 32, the divider member 30 comprises a separator panel arranged on the apex of the roof-like structure 33.

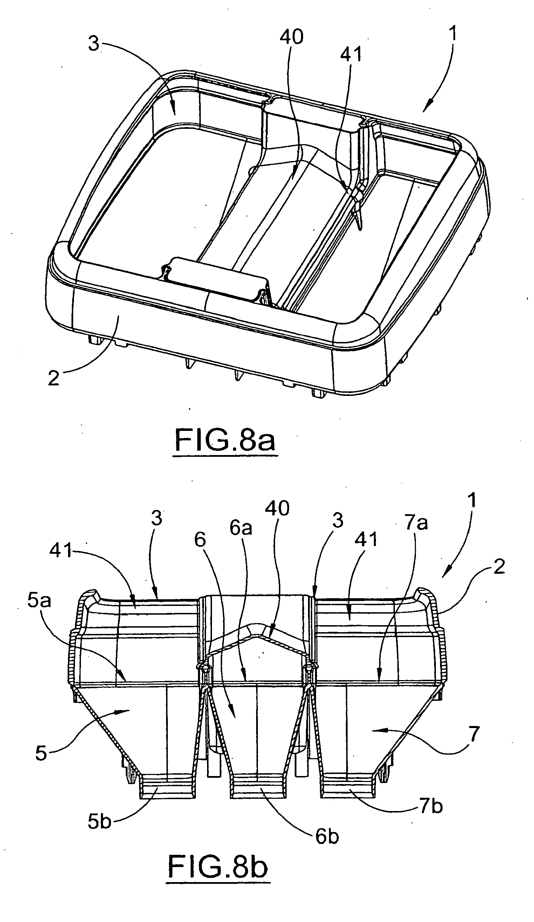

According to the invention as shown in Figures 8a and 8b, the divider means comprise a member 40 associated, for closure, with the inlet section of a dispensing opening, in the example with the inlet section 6a of the dispensing opening 6, and configured in such a way as to form, within the hopper 1, a single compartment 41 suitable for conveying the coffee from the inlet aperture 3 of the hopper 1, towards the inlet sections 5a, 7a of the other two dispensing openings 5,7.

This makes it possible to obtain a single-compartment hopper capable of dispensing the same mixture to two different grinding devices. In this case also, one dispensing opening, in the example the dispensing opening 6, is completely excluded.

The divider member 40 comprises a roof-like structure 42 having two opposed grooves 40a intended to be coupled to the ribs 12a and 12b of the hopper 1 and two flat members 43 suitable for abutting against a portion of the upper edge 2b of the hopper body 2. In this case also, the two sides 42a, 42b of the roof-like structure 42 make it possible to convey the coffee beans contained within the single compartment 41 towards the two dispensing openings 5, 7.

The hopper 1 of the present invention may be used in a coffee machine, for example automatic, equipped with the grinding devices 9, 10, 11, each connected to a dispensing opening 5, 6, 7 for grinding the coffee beans dispensed by the hopper 1 via the corresponding dispensing opening 5, 6, 7.

As may be realised from what has been described, the coffee machine hopper according to the invention makes it possible to fulfil the requirements mentioned in the introduction of the present description and to remedy the drawbacks of the prior art.

In the case in point, the presence of a plurality of dispensing openings and of divider members removably associated with the hopper makes it possible to produce a hopper with one or more compartments for feeding one or more dispensing openings so as to be able to produce a plurality of combinations of coffee bean mixtures for feeding the grinding devices connected to the dispensing openings.

It is also useful to note that the dispensing openings may be more than three in number, like the different divider members, so as to provide a number of compartments that is variable from one to the number of dispensing openings.

In order to satisfy contingent and specific requirements, a person skilled in the art may apply to the hopper according to the invention, described above, many modifications and variants, all however contained within the scope of protection of the invention as defined by the following claims.

## Claims

1. A hopper (1) for containing and dispensing coffee beans to a coffee machine, comprising:
- an inlet aperture (3) suitable for receiving coffee beans, and
- dispensing means for dispensing coffee beans,
said dispensing means comprising a plurality of dispensing openings (5, 6, 7), each dispensing opening of said plurality being connectable to respective grinding means (9, 10, 11), and
said hopper (1) comprising divider means (20, 30, 40) removably associated within said hopper (1) for forming one (41) or more containment compartments (21, 22, 23, 31, 32) separated from one another, each compartment having a respective inset aperture (3, 21a, 22a, 23a, 31a, 32a) and communicating with at least one dispensing opening (5, 6, 7) for conveying the coffee from the respective inlet aperture towards said at least one dispensing opening,
wherein said plurality of dispensing openings comprises three dispensing openings (5, 6, 7), each having an inlet section (5a, 6a, 7a) and an outlet section (5b, 6b, 7b), **characterized by** the fact that said divider means comprise a member (40) associated, for closure, with the inlet section (6a) of a dispensing opening (6) and configured so as to form, within the hopper (1), a single compartment (41) suitable for conveying the coffee towards the inlet sections (5a, 7a) of the other two dispensing openings (5, 7).

2. A hopper (1) for dispensing coffee beans according to claim 1, wherein said divider means comprise engagement means suitable for being removably coupled to corresponding engagement means (12) provided inside said hopper (1).

3. A hopper (1) for dispensing coffee beans according to claim 2, wherein the engagement means (12) of the hopper comprise ribs provided on the inner wall (2) of the hopper (1).

4. A hopper (1) for dispensing coffee beans according to claim 3, wherein said ribs (12) comprise first ribs (12a) forming the separation zone between the inlet sections (5a, 6a, 7a) of the dispensing openings (5, 6, 7) and second ribs (12b) which extend from the first ribs (12a) to the inlet aperture (3) of the hopper (1).

5. A hopper (1) for dispensing coffee beans according to any one of claims from 1 to 4, wherein said closure member (40) has grooves (40a) in engagement with the ribs (12a, 12b) of the hopper (1).

6. A coffee machine comprising:
- a hopper (1) for containing and dispensing coffee beans according to any one of the preceding claims, and
- a plurality of grinding devices (9, 10, 11), each connected to a dispensing opening (5, 6, 7) for grinding the coffee beans dispensed by said hopper (1) via the corresponding dispensing opening (5, 6, 7).

## Patentansprüche

1. Zuführbehälter (1) zum Enthalten und Abgeben von Kaffeebohnen an eine Kaffeemaschine, umfassend:
- eine Einlaßöffnung (3), die zum Aufnehmen von Kaffeebohnen geeignet ist, und
- Abgabemittel zum Abgeben von Kaffeebohnen,
wobei die Abgabemittel eine Mehrzahl von Abgabeöffnungen (5, 6, 7) umfassen, wobei jede Abgabeöffnung der Mehrzahl an jeweilige Mahlmittel (9, 10, 11) anschließbar ist,
wobei der Zuführbehälter (1) Teilermittel (20, 30, 40) umfaßt, die dem Zuführbehälter (1) abnehmbar zugeordnet sind, um ein (41) oder mehrere Aufnahmefach/-fächer (21, 22, 23, 31, 32) auszubilden, die voneinander getrennt sind, wobei jedes Fach eine jeweilige Einlaßöffnung (3, 21 a, 22a, 23a, 31 a, 32a) aufweist und mit zumindest einer Abgabeöffnung (5, 6, 7) zum Befördern des Kaffees von der jeweiligen Einlaßöffnung zu der zumindest einen Abgabeöffnung in Verbindung steht,
wobei die Mehrzahl von Abgabeöffnungen drei Abgabeöffnungen (5, 6, 7) umfaßt, von denen jede einen Einlaßabschnitt (5a, 6a, 7a) und einen Auslaßabschnitt (5b, 6b, 7b) aufweist,
**dadurch gekennzeichnet,**
**daß** die Teilermittel ein Element (40) umfassen, das dem Einlaßabschnitt (6a) einer Abgabeöffnung (6) zum Verschließen zugeordnet und so konfiguriert ist, daß innerhalb des Zuführbehälters (1) ein einzelnes Fachs (41) gebildet wird, das zum Befördern des Kaffees zu den Einlaßabschnitten (5a, 7a) der anderen beiden Abgabeöffnungen (5, 7) geeignet ist.

2. Zuführbehälter (1) zum Abgeben von Kaffeebohnen nach Anspruch 1, wobei die Teilermittel Eingriffsmittel umfassen, die zum lösbaren Koppeln an entsprechende Eingriffsmittel (12) geeignet sind, die innerhalb des Zuführbehälters (1) vorgesehen sind.

3. Zuführbehälter (1) zum Abgeben von Kaffeebohnen nach Anspruch 2, wobei die Eingriffsmittel (12) des Zuführbehälters Rippen umfassen, die auf der Innenwand (2) des Zuführbehälters (1) vorgesehen sind.

4. Zuführbehälter (1) zum Abgeben von Kaffeebohnen nach Anspruch 3, wobei die Rippen (12) erste Rippen (12a), die den Trennbereich zwischen den Einlaßabschnitten (5a, 6a, 7a) der Abgabeöffnungen (5, 6, 7) ausbilden, und zweite Rippen (12b) umfassen, die von den ersten Rippen (12a) zur Einlaßöffnung (3) des Zuführbehälters (1) verlaufen.

5. Zuführbehälter (1) zum Abgeben von Kaffeebohnen nach einem der Ansprüche 1 bis 4, wobei das Verschließelement (40) Nuten (40a) aufweist, die in Eingriff mit den Rippen (12a, 12b) des Zuführbehälters (1) stehen.

6. Kaffeemaschine, umfassend:
- einen Zuführbehälter (1) zum Enthalten und Abgeben von Kaffeebohnen nach einem der vorhergehenden Ansprüche und
- eine Mehrzahl von jeweils mit einer Abgabeöffnung (5, 6, 7) verbundenen Mahlvorrichtungen (9, 10, 11)zum Mahlen der Kaffeebohnen, die von dem Zuführbehälter (1) über die entsprechende Abgabeöffnung (5, 6, 7) abgegeben werden.

## Revendications

1. Trémie (1) destinée à contenir et à distribuer des grains de café à une cafetière, comprenant:
- une ouverture d'entrée (3) apte à recevoir des grains de café, et
- des moyens de distribution pour distribuer des grains de café,
lesdits moyens de distribution comprenant une pluralité d'ouvertures de distribution (5, 6, 7), chacune des ouvertures de distribution de ladite pluralité pouvant être raccordée à des moyens respectifs de moulure (9, 10, 11),
ladite trémie (1) comprenant des moyens diviseurs (20, 30, 40) associés de manière amovible à la trémie (1) afin de former un (41) ou plusieurs compartiment(s) de réception (21, 22, 23, 31, 32) qui sont séparés les uns des autres, chacun des compartiments présentant une ouverture d'entrée respective (3, 21 a, 22a, 23a, 31 a, 32a) et communiquant avec au moins une ouverture de distribution (5, 6, 7) pour transporter le café de l'ouverture d'entrée respective à ladite au moins une ouverture de distribution,
la pluralité d'ouvertures de distribution comprenant trois ouvertures de distribution (5, 6, 7) dont chacune présente une section d'entrée (5a, 6a, 7a) et une section de sortie (5b, 6b, 7b),
**caractérisée par le fait**
**que** lesdits moyens diviseurs comprennent un membre (40) qui est associé, pour la fermeture, à ladite section d'entrée (6a) d'une ouverture de distribution (6) et qui est configuré de manière à former, à l'intérieur de la trémie (1), un compartiment unique (41) apte à transporter le café vers les sections d'entrée (5a, 7a) des deux autres ouvertures de distribution (5, 7).

2. Trémie (1) de distribution de grains de café selon la revendication 1, dans laquelle lesdits moyens diviseurs comprennent des moyens d'engagement aptes à être couplés de manière amovible à des moyens d'engagement respectifs (12) prévus à l'intérieur de la trémie (1).

3. Trémie (1) de distribution de grains de café selon la revendication 2, dans laquelle lesdits moyens d'engagement (12) de la trémie comprennent des nervures prévues sur la paroi intérieure (2) de la trémie (1).

4. Trémie (1) de distribution de grains de café selon la revendication 3, dans laquelle les nervures (12) comprennent de premières nervures (12a) formant la zone de séparation entre les sections d'entrée (5a, 6a, 7a) des ouvertures de distribution (5, 6, 7) ainsi que de secondes nervures (12b) s'étendant depuis lesdites premières nervures (12a) à l'ouverture d'entrée (3) de la trémie (1).

5. Trémie (1) de distribution de grains de café selon l'une quelconque des revendications 1 à 4, dans laquelle l'élément de fermeture (40) présente des rainures (40a) qui sont en prise avec les nervures (12a, 12b) de la trémie (1).

6. Cafetière comprenant :
- une trémie (1) destinée à contenir et à distribuer des grains de café selon l'une quelconque des revendications précédentes et
- une pluralité de dispositifs de moulure (9, 10, 11) raccordés chacun à une ouverture de distribution (5, 6, 7) pour moudre les grains de café distribués par la trémie (1) via l'ouverture de sortie (5, 6, 7) correspondante.
